# EUROPÄISCHE PATENTSCHRIFT

(11) **EP 1 792 377 B1**
(45) Veröffentlichungstag und Bekanntmachung des Hinweises auf die Patenterteilung: **20.06.2018**
(21) Anmeldenummer: 05774421.1
(22) Anmeldetag: 10.08.2005
(51) Int. Cl.: H02G 15/013, H02B 1/30, H02G 3/08

(54) **KABELDURCHFÜHRUNG**
CABLE DUCT
PASSE-CABLE

(30) Priorität: 02.11.2004 DE 102004053370
(43) Veröffentlichungstag der Anmeldung: 06.06.2007
(73) Patentinhaber: icotek projekt GmbH & Co.KG, 73563 Mögglingen (DE)
(72) Erfinder: EHMANN, Bruno, 73563 Mögglingen (DE)
(74) Vertreter: Dr. Weitzel & Partner
(86) Internationale Anmeldenummer: PCT/EP2005/008673
(87) Internationale Veröffentlichungsnummer: WO 2006/048063

(56) Entgegenhaltungen:
- DE-A1- 4 028 570
- DE-A1- 10 143 296
- DE-U1- 29 911 305
- US-A- 5 806 139

## Beschreibung

Die Erfindung betrifft eine Kabeldurchführung nach dem Oberbegriff des Anspruchs 1.

Die DE 101 43 296 A1 zeigt eine solche Kabeldurchführung mit den Merkmalen im Oberbegriff des Anspruchs 1 in Form eines Kabeldurchführsystems für konfektionierte Leitungen. Dabei wird eine geschlitzte Zugentlastung in einem zweiteiligen Grundkörper aufgenommen, welcher in einer Wandöffnung verschraubt werden kann. Auch die DE 299 11 305 U1 zeigt einen Aufbau mit dem Merkmalen im Oberbegriff des Anspruchs 1. Das dortige Kabel-Stecker-Durchführsystem beschreibt elastische Einsätze, welche zwischen zwei verschraubbaren Halbschalen aufgenommen werden können. Der Gesamtaufbau lässt sich dann mit einer Gehäusewand verschrauben.

Bei Kabeldurchführungen dieser Art wird der Grundkörper mit der Außenwand eines Schaltschranks verschraubt, was zum einen zusätzliches Werkzeug voraussetzt. Zum anderen wird auch die Optik des Schaltschrankes negativ verändert.

Zum weiteren Stand der Technik kann außerdem auf die Dichtungsanordnung für Kabel aus der DE 40 28 570 A1 sowie auf die abdichtende Kabeldurchführung aus der US 5,806,139 A hingewiesen werden.

Es ist Aufgabe der Erfindung, die gattungsgemäße Kabeldurchführung so zu verbessern, dass die Anbringung der Kabeldurchführung in denkbar einfacher Weise und ohne Werkzeug erfolgen kann.

Die gestellte Aufgabe wird durch die Merkmale des Anspruchs 1 gelöst.

Die Erfindung besteht im Wesentlichen darin, dass der Grundkörper sowie die Zugentlastung so ausgebildet sind, dass zum einen alle Teile aus gleichem Werkstoff bestehen und somit einfach hergestellt werden können. Zum anderen erfordert die Montage kein weiteres Werkzeug. Die Montage der vorzugsweise vorkonfektionierten Kabeldurchführung besteht vielmehr darin, dass ein Kabelabschnitt mit Steckern durch die Wandöffnung gesteckt und sodann der Grundkörper in der Wandöffnung fixiert wird, um eine feste Verbindung zwischen dem Grundkörper und der Wand herzustellen. Dabei greift der rundum laufende Abschnitt der Wandöffnung in eine umlaufene Nut des Grundkörpers ein, die sich beim Eindrücken des Grundkörpers kurzfristig verformt, bis eine formschlüssige Verbindung zwischen den beiden Bauteilen hergestellt ist. Der Werkstoff des Grundkörpers ist so beschaffen, dass er gleichzeitig zwei Funktionen der Kabeldurchführung erfüllt, nämlich die erforderliche Verformbarkeit, um den Grundkörper in die Wandöffnung einbringen zu können, zum anderen hinreichende Härte und Festigkeit, um die Zugentlastung sowie das Kabel betriebsgemäß festzuhalten. Der Grundkörper ist einteilig ausgeführt. Er besteht aus einem von Hand verformbaren Gummi oder Kunststoff und weist eine der Anzahl der Aufnahmen für die Zugentlastungen entsprechende Anzahl von Schlitzen zum Aufklappen auf. Vorzugweise bestehen der Grundkörper und die Zugentlastung aus gleichem Werkstoff. Bei der Montage der Kabeldurchführung wird im Wesentlichen wie folgt vorgegangen: Die Kabeldurchführung wird vorzugsweise fabrikmäßig vorkonfektioniert, indem die Kabel in die aufgeklappten Zugentlastungen gelegt werden. Danach werden die zugeklappten Zugentlastungen samt Kabel in den aufgeklappten Grundkörper gelegt. Nach dem der Grundkörper zugeklappt wurde, ist die Kabeldurchführung betriebsbereit. Sie kann z.B. bei einem Schaltschrank mit Öffnung eingesetzt werden, indem die Stecker oder Teile der Leitungen zunächst durch die Wandöffnung gesteckt werden und danach der Grundkörper mit der Wandöffnung betriebsgemäß verbunden wird. Die Beschaffenheit des Grundkörpers sowie der Kabeldurchführung, vorzugsweise aus Hartgummi, gewährleisten zum einen eine feste Verbindung zwischen der Kabeldurchführung und dem Schaltschrank. Zum anderen ist diese Verbindung auch dicht genug, um zu verhindern, dass insbesondere Feuchtigkeit in den Schaltschrank von außen gelangt.

Weiter zweckmäßige und vorteilhafte Maßnahmen der Erfindung gehen aus den Unteransprüchen hervor.

Einige Ausführungsbeispiele der Erfindung sind in der Zeichnung schematisch dargestellt und werden im Folgenden näher erläutert.

Es zeigen:
- Fig.1: eine Kabeldurchführung in perspektivischer Darstellung,
- Fig.2: die in Fig. 1 dargestellte Kabeldurchführung, jedoch ohne Zugentlastungen, also nur den Grundkörper,
- Fig.3: den Grundkörper nach Fig. 2 in einer anderen perspektivischen Ansicht,
- Fig.4: eine Schnitt entlang der Linie IV-IV nach Fig.2,

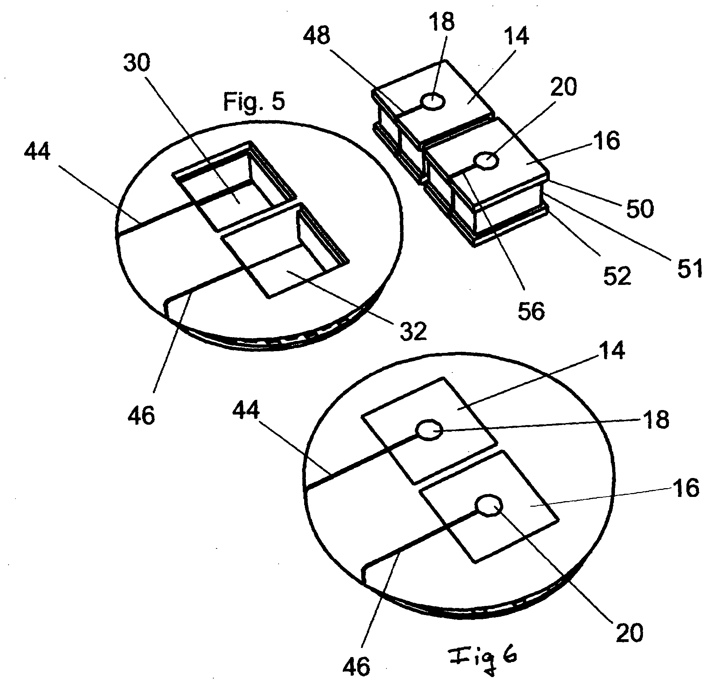

- Fig.5: die Kabeldurchführung nach Fig. 1 in zerlegtem Zustand,
- Fig.6: die Kabeldurchführung nach Fig. 5 in zusammengebautem Zustand,

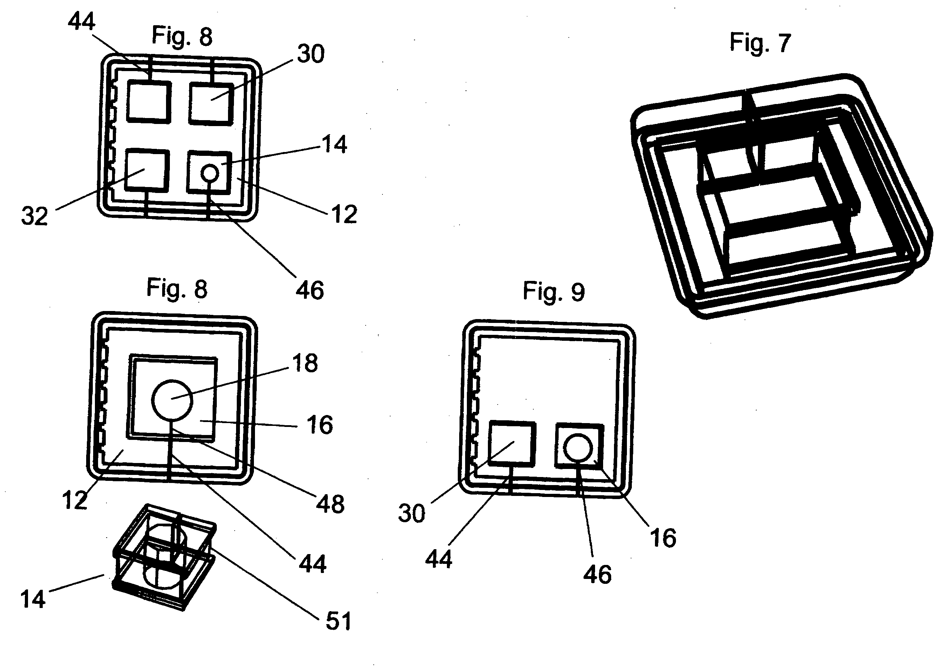

- Fig.7: eine Kabeldurchführung mit rechteckigem Außenumriss und rechteckigen Öffnungen in perspektivischer Ansicht,
- Fig.8: (unten) die Kabeldurchführung nach Fig.7 in Stirnansicht, (oben)eine Kabeldurchführung mit vier Öffnungen und
- Fig.9: eine Kabeldurchführung mit zwei Öffnungen

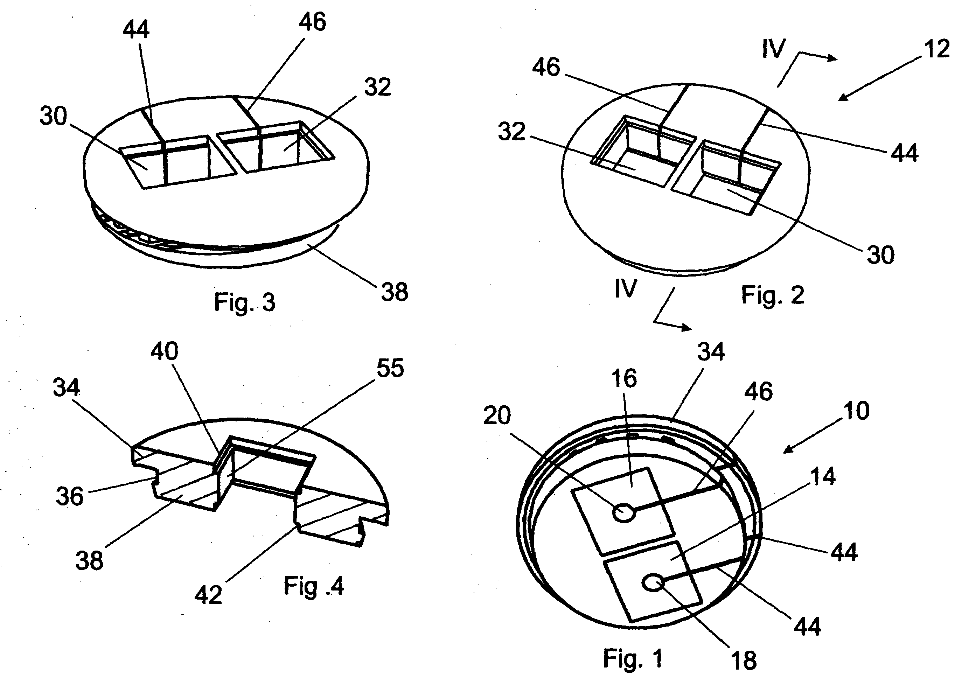

Die Figuren zeigen eine Kabeldurchführung 10 mit einem Grundkörper 12 sowie mit Zugentlastungen 14, 16, jedoch ohne Kabel oder Leitungen. Die Zugentlastungen 14, 16 weisen Öffnungen 18, 20 zur Aufnahme von Kabeln auf. Die Kabeldurchführung kann in eine nicht näher dargestellte Wandöffnung z.B. eines Schaltschrankes betriebsgemäß durch Stecken eingebracht werden. Die Wand des Schaltschranks besteht regelmäßig aus Blech von einigen mm Stärke, wobei die Wandöffnung und die Kabeldurchführung 10 aufeinander abgestimmt sind, soweit es die miteinander korrespondierenden Maße betrifft. Der Grundkörper 12 der Kabeldurchführung 10 besteht aus verformbarem Werkstoff, vorzugsweise Gummi oder Kunststoff, weist zwei aufklappbare Aufnahmen 30, 32 für die Zugentlastungen 14, 16 auf und ist in die Wandöffnung einsteckbar. Die äußere Form der Zugentlastungen 14, 16 und die Form der Aufnahmen 30, 32 sind so aufeinander abgestimmt, dass im Betriebszustand die Zugentlastungen 14, 16 im Grundkörper 12 unverückbar und dicht festgehalten werden. Da die Öffnungen 18, 20 für die nicht dargestellten Kabel zumindest geringfügig kleiner sind als deren Außendurchmesser sowie die Aufnahmen 30, 32 zumindest geringfügig kleiner sind als die komplementären Zugentlastungen 14, 16, wird sowohl auf die Zugentlastungen 14, 16 als auch auf die Kabel eine Betriebsdruck ausgeübt, der sicherstellt, dass die Kabel in der Kabeldurchführung 10 ordnungsgemäß festgehalten werden. Der auf die Kabel wirkende Druck ist radial ausgerichtet, somit wirkt er in etwa gleichmäßig auf das Kabel. Die Fig. 1-4 lassen erkennen, dass der Grundkörper 12 in seiner Draufsicht kreisrund ist, einen Bund 34 aufweist, der in seiner Draufsicht so bemessen ist, dass er die nicht dargestellte Wandöffnung abdeckt. Der Grundkörper 12 weist eine Einsteckpartie 38 auf, die sich in Steckrichtung hin verjüngt, um in die Wandöffnung einfacher eingeführt zu werden. Zwischen dem Bund 34 und der Einsteckpartie 38 ist eine umlaufende Rastnut 36 ausgebildet, in welche eine komplementäre Umrandung der Wandöffnung eingreifen kann. Die Rastnut 36 kann einen kreisrunden, rechteckförmigen oder N-eckförmigen Außenumriss aufweisen. Ferner ist den Figuren zu entnehmen, dass der in Draufsicht kreisrunde Grundkörper 12 radial geschlitzt und somit aufklappbar ist. Die Anzahl der Schlitze 44, 46 entspricht regelmäßig der Anzahl der Aufnahmen 30, 32. Um eine betriebsgemäße Verbindung zwischen dem Grundkörper 12 und den Zugentlastungen 14, 16 einfach zu erreichen, weisen die Zugentlastungen 14, 16 umfangsseitig Ausnehmungen 51 oder Vertiefungen auf, die mit Vertiefungen 40, 42 oder Ausnehmungen komplementärer Form des Grundkörpers 12 formschlüssig verbindbar sind. Die Zugentlastungen 14, 16 sind ebenfalls geschlitzt. Dabei können deren Schlitze 48, 56 mit den Schlitzen 44 ,46 des Grundkörpers 12 fluchten.

Die Vorteile der erfindungsgemäßen Kabeldurchführung bestehen insbesondere darin, dass die
- Herstellung der kompletten Kabeldurchführung deutlich vereinfacht wurde,
- Konfektionierung der Kabeldurchführung merklich besser ist als beim Stand der Technik,
- Montage und Demontage der Kabeldurchführung ohne spezielles Werkzeug erfolgen kann

## Patentansprüche

1. Kabeldurchführung (10), umfassend die folgenden Merkmale:
1.1 einen Grundkörper (12), der in die Öffnung einer Wand einsetzbar ist;
1.2 der Grundkörper (12) weist Aufnahmen (30, 32) zur Aufnahme wenigstens einer Zugentlastung (14, 16) auf;
1.3 die wenigstens eine Zugentlastung (14, 16) weist einen Schlitz (48,56) zum Aufklappen und Aufnehmen eines Kabels auf; **gekennzeichnet durch** die folgenden Merkmale:
1.4 der Grundkörper (12) besteht aus einem von Hand verformbaren Gummi oder Kunststoff;
1.5 der Grundkörper (12) weist eine der Anzahl der Aufnahmen (30, 32) entsprechende Anzahl von Schlitzen (44, 46) zum Aufklappen auf;
1.6 der Grundkörper (12) ist einteilig.

2. Kabeldurchführung (10) nach Anspruch 1, **dadurch gekennzeichnet, dass** der Grundkörper (12) einen Bund (34) aufweist, der in seiner Draufsicht so bemessen ist, dass er die Wandöffnung von außen abdeckt.

3. Kabeldurchführung nach einem der Ansprüche 1 bis 2, **dadurch gekennzeichnet, dass** der Grundkörper(12) eine Einsteckpartie (38) aufweist, die sich in Steckrichtung hin verjüngt.

4. Kabeldurchführung nach Anspruch 1 und 2, **dadurch gekennzeichnet, dass** zwischen dem Bund (34) und der Einsteckpartie (38) eine umlaufende Rastnut (36) ausgebildet ist, in weiche eine komplementäre Umrandung der Wandöffnung eingreift.

5. Kabeldurchführung nach einem der Ansprüche 1 bis 4, **dadurch gekennzeichnet, dass** die Zugentlastungen (14,16) aus gleichem Werkstoff wie der Grundkörper (12) bestehen.

## Claims

1. Cable duct (10), comprising the following features:
1.1 a base body (12) insertable in the opening of a wall;
1.2 the base body (12) has receptacles (30, 32) for receiving at least one strain relief (14, 16);
1.3 the at least one strain relief (14, 16) has a slot (48, 56) for unfolding and receiving a cable; **characterized by** the following features:
1.4 the base body (12) consists of a hand-deformable rubber or plastic;
1.5 the base body (12) has a number of slots (44, 46) for unfolding which correspond to the number of receptacles (30, 32);
1.6 the base body (12) is integral.

2. Cable duct (10) according to claim 1, **characterized in that** the base body (12) has a collar (34) which is dimensioned in its plan view so that it covers the wall opening from the outside.

3. Cable duct according to one of the claims 1 to 2, **characterized in that** the base body (12) has an insertion section (38), which tapers in the insertion direction.

4. Cable duct according to claim 1 and 2, **characterized in that** between the collar (34) and the insertion section (38) a circumferential locking groove (36) is formed, into which a complementary border of the wall opening engages.

5. Cable duct according to one of the claims 1 to 4, **characterized in that** the strain reliefs (14, 16) consist of the same material as the base body (12).

## Revendications

1. Traversée de câbles (10) comprenant les caractéristiques suivantes :
1.1 un corps de base (12) qui peut être introduit dans une ouverture d'une paroi,
1.2 lequel corps de base (12) présente des logements (30, 32) pour recevoir au moins une décharge de traction (14, 16),
1.3 l'au moins une décharge de traction (14, 16) présentant une fente (48,56) qui sert à l'ouvrir et à recevoir un câble,
**caractérisée en ce que** :
1.4 le corps de base (12) se compose d'un caoutchouc ou d'un plastique déformable à la main ;
1.5 le corps de base (12) présente un nombre de fentes d'ouverture (44, 46) correspondant au nombre de logements (30, 32) ;
1.6 le corps de base (12) est fait d'une pièce.

2. Traversée de câbles (10) selon la revendication 1, **caractérisée en ce que** le corps de base (12) présente un collet (34) qui est dimensionné, en vue de dessus, de façon à couvrir l'ouverture de la paroi par l'extérieur.

3. Traversée de câbles selon l'une des revendications 1 à 2, **caractérisée en ce que** le corps de base (12) présente une partie emboîtable (38) qui se resserre dans le sens d'emboîtement.

4. Traversée de câbles selon les revendications 1 et 2, **caractérisée en ce qu'**est formée entre le collet (34) et la partie emboîtable (38) une rainure d'enclenchement (36) circonférentielle dans laquelle se met en prise un rebord de forme complémentaire de l'ouverture de la paroi.

5. Traversée de câbles selon l'une des revendications 1 à 4, **caractérisée en ce que** les décharges de traction (14,16) se composent du même matériau que le corps de base (12).
